# EUROPÄISCHE PATENTSCHRIFT

(11) **EP 2 542 856 B1**
(45) Veröffentlichungstag und Bekanntmachung des Hinweises auf die Patenterteilung: **15.04.2015**
(21) Anmeldenummer: 11710442.2
(22) Anmeldetag: 03.03.2011
(51) Int. Cl.: G01B 11/24, G02C 13/00, B24B 9/14

(54) **MESSANORDNUNG ZUM VERMESSEN EINES BRILLENGESTELLS**
MEASURING ASSEMBLY FOR MEASURING A SPECTACLE FRAME
DISPOSITIF DE MESURE POUR LE DIMENSIONNEMENT D'UNE MONTURE DE LUNETTES

(30) Priorität: 04.03.2010 DE 102010010340
(43) Veröffentlichungstag der Anmeldung: 09.01.2013
(73) Patentinhaber: Schneider GmbH & Co. KG, 35112 Fronhausen (DE)
(72) Erfinder: SCHNEIDER, Gunter, 35037 Marburg (DE); GERRATH, Torsten, 35037 Marburg (DE); BOERNER, Ulf, 35041 Marburg (DE)
(74) Vertreter: Thews, Gustav
(86) Internationale Anmeldenummer: PCT/EP2011/053150
(87) Internationale Veröffentlichungsnummer: WO 2011/107529

(56) Entgegenhaltungen:
- EP-A1- 0 974 038
- WO-A2-2008/093332
- DE-A1- 3 640 476
- DE-A1- 4 407 518
- DE-A1- 4 414 835
- DE-A1- 19 832 014
- DE-C1- 19 725 159
- DE-C1- 19 926 439
- DE-T2- 69 637 346
- FR-A1- 2 814 808

## Beschreibung

Die Erfindung bezieht sich auf eine Messanordnung zum optischen Vermessen einer Innenseite eines Brillenrahmens eines Brillengestells, der eine einer Brillenglasform entsprechende einbeschriebene, in der Regel gekrümmte Fläche F zumindest teilweise begrenzt, mit einer Halteeinrichtung zum Lagern des Brillengestells, mit mindestens einer Lichtquelle zum Erzeugen eines auf einen auszuwertenden Bereich des Brillenrahmens zu projizierenden linienförmigen Lichtstrahls, mit mindestens einem mit einer Auswerteeinheit koppelbaren Sensor zur Erfassung des reflektierten Lichtstrahls, wobei die Halteeinrichtung um eine Rotationsachse r drehbar und in Richtung einer Bewegungsachse x verfahrbar ist und die Bewegungsachse x zumindest eine Bewegungskomponente in eine Richtung rechtwinklig zur Rotationsachse r aufweist **und der auswertbare Bereich des Brillenrahmens mit Bezug zur Rotationsachse r einen Umfang von** bis **zu 360° aufweist, wobei die Halteeinrichtung zur Fixierung des Brillengestells mit Brillengestellbügeln dient, wobei im Bereich der Halteeinrichtung mindestens ein Freiraum vorgesehen ist, der zur Aufnahme der Brillengestellbügel eines zu haltenden Brillengestells dient, die nicht eingeklappt oder nicht einklappbar sind, wobei der Freiraum auf der der Lichtquelle und/oder dem Sensor abgewandten Seite des Brillenrahmens vorgesehen ist.**

Es ist bereits eine Messanordnung zum berührungslosen Erfassen der 3-dimensionalen Raumform einer in einer Brillenfassung umlaufenden Nut aus der EP 0 974 038 B1 bekannt, mit einer Lichtquelle, deren Lichtstrahl auf die Nut gerichtet ist oder auf diese mittels eines optischen Umlenksystems ablenkbar ist, mit einem optischen Abbildungssystem, das das an der Nut reflektierte Licht auf eine optische Detektoreinheit abbildet und weitgehend zentrisch zu der zu vermessenden Nut der Brillenfassung angeordnet ist, mit einer die Brillenfassung tragenden Haltevorrichtung, die relativ zu der Lichtquelle, der Detektoranordnung sowie dem optischen Abbildungssystem um eine Zentrierachse einer von der umlaufenden Nut der Brillenfassung einbeschriebenen Fläche drehbar gelagert ist, mit einer Auswerteeinheit zur Ermittlung der 3-dimensionalen Raumform der Nut, wobei die Lichtquelle die Nut mit einem einzigen linienförmigen Strahl beleuchtet und der Lichtstrahl der Lichtquelle weitgehend rechtwinklig auf die von der umlaufenden Nut der Brillenfassung einbeschriebene Fläche gerichtet ist, sowie einer Auswerteeinheit zur Ermittlung der 3-dimensionalen Raumform der Nut, die nach dem Lichtschnittverfahren arbeitet.

**Die** DE 197 25 159 C1**,** DE 199 26 439 C1 **und** DE 44 07 518 A1 **gehen nicht über den Offenbarungsgehalt vorgenannter** EP 0 974 038 B1 **hinaus.**

Aus der DE 100 49 382 A1 ist eine Messanordnung zur Vermessung der Geometrie von Linsenrändern bekannt. Diese weist ebenfalls eine Beleuchtungseinheit und eine Beobachtungseinheit auf, die unter einem Triangulationswinkel angeordnet sind. Im Unterschied zu der Vermessung einer Brillenfassung tritt bei dem Vermessen des freien Brillenrandes nicht die Problematik mit der zu vermessenden und nach außen geschlossenen bzw. insoweit in radialer Richtung von außen unzugänglichen Innenseite des Brillenrahmens auf.

Die DE 696 37 346 T2 beschreibt eine Linsenmessvorrichtung, beschrieben mit einer Aufnahme für die Brille als Ganzes. Zwecks Auswertung der Linse bzw. des Brillenglases wird die Brille in zwei verschiedenen Richtungen translatorisch verschoben. Eine Rotation der Brille ist aufgrund des sich in radialer Richtung zur Linse erstreckenden Aufnahmekörpers nicht möglich.

In der US 5,121,550 A wird ein Tast-Tracer beschrieben, bei dem zwecks Erfassung verschiedener Messpunkte über den Umfang der Fassung der Tastkopf rotiert wird. Eine Rotation des Halteteils erfolgt nicht.

**Die** WO 2008/093332 A2 **beschreibt eine Vorrichtung und ein Verfahren zum Auswerten einer Brille zwecks Erstellung eines passenden Ergänzungs-Clips. Hierbei wird die Brille rotiert, um die äußere Form des Rahmens zu erfassen. Eine Auswertung der Innenkontur des Brillenrahmens ist mit dieser Vorrichtung jedoch nicht möglich.**

**Die** FR 2 814 808 A1 **beschreibt eine Vorrichtung mit einer Aufnahme für die Brille als Ganzes, wobei der Brillenrahmen mit Bezug zu einer Richtung R1 geklemmt wird. Zwecks Auswertung der Linse bzw. des Brillenglases werden der Beleuchtungs- und Auswertesensor sowohl translatorisch in eine Richtung R2 rechtwinklig zu R1 verschoben als auch um eine hierzu überlagerte Rotationachse rotiert.**

**Die** DE 36 40 476 A1 **beschreibt einen im Brillenrahmen umlaufenden und federvorbelasteten Abtastdorn.**

**Die** DE 44 14 835 A1 **und die** DE 198 32 014 A1 **beschreiben eine Zentriervorrichtung für Brillenrahmen.**

Der Erfindung liegt die Aufgabe zugrunde, eine Messanordnung und ein entsprechendes Verfahren derart auszubilden und anzuordnen, dass eine schnellere und genauere Vermessung sowie eine Automatisierung der Vermessung gewährleistet sind.

Gelöst wird die Aufgabe erfindungsgemäß durch **d**ie **Merkmale des Anspruchs 1.** **Zwecks** Vermessung beider Rahmenteile eines Brillenrahmens ist ein Umspannen des Brillenrahmens somit nicht mehr notwendig. Die Zentrierung in der zweiten Bewegungsachse y ist bereits wie vorstehend beschrieben durch die Klemmelemente erfolgt. **Da** die Bewegungsachse x der Rotationsachse r überlagert ist, **sind** Getriebemittel der Bewegungsachse x um die Rotationsachse r rotierbar. Somit ist auf der Seite der Bewegungsachse x mehr Freiraum für die Brillengestellbügel realisierbar.

Das Brillengestell inklusive Brillengestellbügel können somit im erforderlichen Ausmaß translatorisch bewegt und rotiert werden, ohne dass diese Bewegung bzw. die Messung durch die Bügel beeinflusst würde. Mit der Schaffung des Freiraums geht eine Umgestaltung des bis dato üblichen mit einem Messtisch vergleichbaren Aufbaus einher, so dass die Vermessung jeglicher Brillengestelle auch automatisiert gewährleistet ist. Die Halteeinrichtung bildet sozusagen ein ausreichend hohes Podest, auf dem das komplette Brillengestell mit aufgeklappten Brillengestellbügeln fixiert ist, wobei die Brillengestellbügel das Podest seitlich flankieren. Die Höhe des Podests beträgt also mindestens der Länge der flankierenden Brillengestellbügel.

Die einzige translatorische Bewegungsachse x ist über eine Paarung aus feststehender Zahnstange und darauf abrollendem Ritzel angetrieben, wobei parallel zur Zahnstange bzw. darin integriert die Lager- bzw. Führungsschiene verläuft. Eine weitere translatorische Bewegungsachse mit einer Bewegungskomponente in eine Richtung rechtwinklig zur Bewegungsachse x ist für die Halteeinrichtung nicht notwendig. Die Ausrichtung in diese Richtung erfolgt über die in Richtung Y vorspannbaren Klemmelemente.

Vorteilhaft kann es hierzu auch sein, wenn die Halteeinrichtung mindestens zwei Klemmelemente zum Fixieren des Brillenrahmens aufweist, die in eine Richtung einer Bewegungsachse y mit einer Bewegungskomponente rechtwinklig zur Bewegungsachse x und mit einer Bewegungskomponente rechtwinklig zur Rotationsachse r bewegbar und gegen den Brillenrahmen vorspannbar sind. Mit der Bewegbarkeit bzw. Vorspannbarkeit der Klemmelemente in Richtung der Bewegungsachse y ist eine Ausrichtung des zu klemmenden bzw. fixierenden Brillenrahmens in eben diese Richtung gewährleistet.

Da die Bewegungsachse y eine Richtungskomponente rechtwinklig zu der Bewegungsachse x und der Rotationsachse r aufweist, ist somit eine Ausrichtung des Brillenrahmens relativ zur Rotationsachse r möglich ohne eine weitere Translationsachse.

Ferner kann es vorteilhaft sein, wenn die Klemmelemente Getriebe- und/oder Vorspannmittel aufweisen, wobei das jeweilige Klemmelement mit Bezug zur Richtung der Bewegungsachse y bei fixiertem Brillenrahmen die gleiche Vorspannung und/oder den gleichen Abstand k in Richtung der Bewegungsachse y aufweist. Mit Gewährleistung des gleichen Abstands k zur Rotationsachse r ist ein zwischen den Klemmelementen fixierter Brillenrahmen gleichfalls mittig zur Rotationsachse r ausgerichtet. Eine gesonderte Ausrichtung bezüglich der Bewegungsachse y entfällt. Der Einspannbereich zwischen zwei Klemmelementen, also der doppelte Abstand 2k, der die Höhe der zu klemmenden Brillenrahmen spiegelt, bewegt sich zwischen 10 mm und 100 mm oder zwischen 17 mm und 64 mm.

Dabei kann es vorteilhafterweise vorgesehen sein, dass die Klemmelemente mit Bezug zur Bewegungsachse x einen Abstand a aufweisen, der einen Wert zwischen 2 cm und 7 cm oder zwischen 3 cm und 7 cm nicht unterschreitet und einen Wert zwischen 7 cm und 10 cm nicht überschreitet. Die untere Grenze ergibt sich aus dem zwischen beiden Fassungsteilen angeordneten Nasenteil, das ausgelassen werden muss, wie es für die vorstehend beschriebene Einspannung symmetrisch zur Rotationsachse r aufgrund seiner Form nicht geeignet ist. Die obere Grenze wird durch den für die Brillengestellbügel notwendigen Freiraum einerseits und durch die Anwendbarkeit für kleinere Brillengestelle, wie bspw. für Kinder, andererseits begründet.

Im Zusammenhang mit der erfindungsgemäßen Ausbildung und Anordnung kann es von Vorteil sein, wenn Abschottungsmittel vorgesehen sind, mittels derer der zu benetzende Teil des Brillenrahmens gegenüber der Messanordnung abschottbar ist.

Bei dem zu benetzenden Teil des Brillenrahmens kann es sich auch nur um einen Sektor des jeweiligen rechten Teils oder des linken Teils des Brillenrahmens handeln. Zwecks Gewährleistung einer Abschottung der bewegten Teile können Bürstenleisten o.ä. eingesetzt werden. Für transparenten oder stark spiegelnden Oberflächen ist zwecks Gewährleistung einer diffusen Reflexion eine Beschichtung oder Benetzung der Oberfläche durch eine Beschichtungseinheit notwendig. Eine Möglichkeit der Beschichtung ist die Anwendung von Wasserdampf, der sich auf dem relativ kühleren Brillenrahmen als Kondensat niederschlägt. Der Dampf kann auch in Form warmer Luft mit einer ausreichend hohen relativen Feuchte bereitgestellt werden, sofern am Brillenrahmen eine ausreichende Abkühlung der Luft gewährleistet ist. Andere Benetzungsmittel wie Pulver oder Staub sind ebenfalls anwendbar.

Vorteilhaft kann es ferner sein, wenn Auffangmittel für Flüssigkeiten vorgesehen sind, über die anfallendes Kondensat aus dem Bereich der Halteeinrichtung bzw. aus der dort über die Abschottungsmittel gebildeten Klimabox abgeführt und/oder gespeichert werden kann.

Außerdem kann es vorteilhaft sein, wenn der Brillenrahmen über die Lichtquelle direkt mit dem Lichtstrahl beleuchtbar ist, wobei die Lichtquelle mit Bezug zur Richtung einer Flächennormalen N der einbeschriebenen Fläche F mit einem Abstand L1>0 zur einbeschriebenen Fläche F positionierbar ist, und dass der Sensor mit dem vom Brillenrahmen reflektierten Licht unmittelbar beaufschlagbar ist, wobei der Sensor mit Bezug zur Richtung der Flächennormalen N mit einem Abstand S1>0 zur Fläche F angeordnet ist. Weder die Lichtquelle noch der Sensor befinden sich innerhalb des zu vermessenden Brillenrahmens, sondern oberhalb und/oder unterhalb davon. Vorzugsweise auf derselben Seite des Brillenrahmens. Somit kann die Form der einbeschriebenen Fläche F insbesondere bei starken Abweichungen von der Ebene besser erfasst werden. Im Ergebnis ist die relative Höhenlage zwischen dem Brillenrahmen und der Lichtquelle bzw. dem Sensor so ausgebildet, dass für jeden Normalenvektor ein Abstand L1 bzw. S1 >= 0 gewährleistet ist, so dass der Lichtstrahl nicht durch andere Teile des Brillenrahmens abgeschottet wird.

Somit kann auch der Rand eines Brillenglases oder eines Paares Brillengläser vermessen werden, das über einen entsprechenden Adapter in der Halteeinrichtung fixiert ist.

Als Lichtquelle kommen auch Spiegel, Prismen oder Lichtleitelemente in Betracht, die das emittierte Licht wie gewünscht auf den Rahmen umleiten. Als Sensor kommen auch Spiegel, Prismen oder Lichtleitelemente in Betracht, die das reflektierte Licht zum Sensor hin umleiten.

Ferner kann es vorteilhaft sein, wenn die Lichtquelle und der Sensor bezüglich einer jeweiligen optischen Hauptachse H4, H5 einen Triangulationswinkel α einschließen, wobei eine durch den Triangulationswinkel α aufgespannte Ebene E definiert ist, und die Ebene E gegenüber der Rotationsachse r bzw. der Vertikalen und gegenüber der Bewegungsachse x bzw. der Horizontalen in einem Winkel ß angestellt ist. Der Winkel ß weist einen Wert zwischen 10° und 40° oder zwischen 20° und 30° oder 25° auf. Durch die Anstellung wird die Erfassung stark gekrümmter Brillenrahmen einerseits sowie die Vermeidung von optischen Hinterschneidungen bzw. Verdeckungen beim Erfassen von Nuten andererseits gewährleistet.

Dabei kann es von Vorteil sein, wenn ein Schaltschrank vorgesehen ist, der mit Bezug zur Halteeinrichtung gegenüberliegend zu einer Bedienerposition P angeordnet ist. Insgesamt ist damit ein platzsparender Aufbau gewährleistet. Der Schaltschrank kann gleichzeitig als Lager für den Monitor, zumindest aber unterhalb dessen angeordnet sein.

Es kann auch eine zweite Lichtquelle und ein zweiter Sensor mit jeweiligem Abstand L2 und S2 vorgesehen sein, wobei die erste Lichtquelle mit dem ersten Sensor eine erste Einheit bildet und die zweite Lichtquelle mit dem zweiten Sensor eine zweite Einheit bildet und wobei die erste Einheit und die zweite Einheit mit Bezug zur Richtung der Flächennormalen N auf unterschiedlichen Seiten des aufgenommenen Brillenrahmens angeordnet sind. Somit ist eine hinterschneidungsfreie Vermessung von beiden Seiten möglich.

**Außerdem kann es vorteilhaft sein, wenn** ab Beginn der Messung die Rotation um die Rotationsachse r ruckfrei, d. h. mit konstanter Beschleunigung oder mit konstanter Rotationsgeschwindigkeit erfolgt. Somit werden die mit einer schrittweisen bzw. diskreten Positionierung verbundenen Änderungen der Beschleunigung oder der Geschwindigkeit vermieden, so dass eine schnellere und präzise Vermessung gewährleistet ist.

Gelöst wird die Aufgabe zudem durch ein Verfahren zum berührungslosen Vermessen **nach Anspruch 10**. Die Auslenkung der Bewegungsachse x aus ihrer Mittel bzw. Nulllage zwecks Ausrichtung der Rotationsachse r mit der Zentrierachse z1 ist bekannt bzw. erfassbar. Da der Brillenrahmen mittig fixiert ist, ist die Auslenkung der Bewegungsachse x aus ihrer Mittel bzw. Nulllage zwecks Ausrichtung der Rotationsachse r mit der Zentrierachse z2 gleich groß, so dass eine automatisierte Bewegung gewährleistet ist.

Weitere Vorteile und Einzelheiten der Erfindung sind in den Patentansprüchen und in der Beschreibung erläutert und in den Figuren dargestellt. Es zeigt:
- Figur 1, 2a, 2b: eine perspektivische Seitenansicht der Messanordnung;
- Figur 3a, 3b: eine Ansicht von oben;
- Figur 4: eine Teilansicht von oben aus Figur 3a;
- Figur 5: eine Prinzipskizze zur geometrischen Lage.

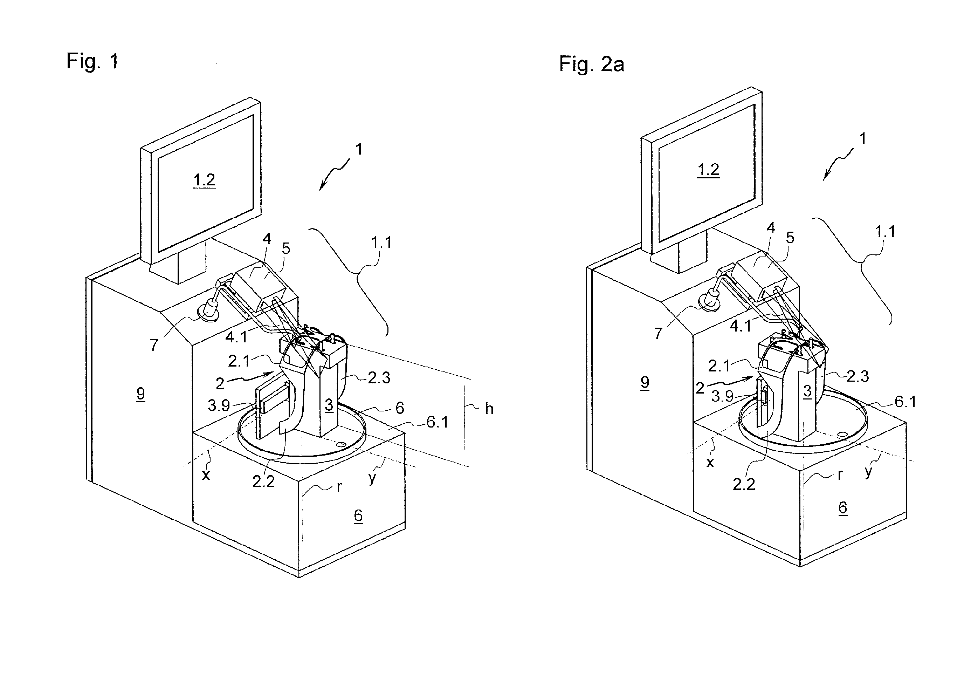

Eine in Fig. 1 dargestellte Messanordnung 1 zum Vermessen von Brillenrahmen 2.1 eines Brillengestells 2 weist eine Auswerteeinheit 1.1 und einen dahinter angeordneten Monitor 1.2 auf, die unmittelbar oberhalb bzw. vor einem Schaltschrank 9 platziert sind.

Die Auswerteeinheit 1.1 besteht aus einer Lichtquelle 4, welche einen linienförmigen Lichtstrahl 4.1 aussendet, und einem Sensor 5, der das vom Brillenrahmen 2.1 reflektierte Licht des Lichtstrahls 4.1 empfängt. Der Brillenrahmen 2.1 ist auf einer Halteeinrichtung 3 fixiert. Die Halteeinrichtung 3 weist eine Rotationsachse r auf und ist über nicht weiter dargestellte Getriebemittel 6 um die Rotationsachse r rotierbar. Die Halteeinrichtung 3 ist auf einem koaxial zur Rotationsachse r angeordneten Tellerboden 6.1 platziert.

Die Halteeinrichtung 3 ist als Podest mit einer Höhe h ausgebildet, auf dem das komplette Brillengestell 2 mit aufgeklappten Brillengestellbügeln 2.2, 2.3 fixiert ist, wobei die Brillengestellbügel 2.2, 2.3 das Podest 3 seitlich flankieren. Die Höhe h des Podests beträgt also mindestens der Länge der flankierenden Brillengestellbügel.

Ferner weist die Halteeinrichtung 3 eine Bewegungsachse x auf, die rechtwinklig zur Rotationsachse r verläuft. Zwecks Bewegung in Richtung der Bewegungsachse x ist eine Führungsschiene 3.9 vorgesehen, die parallel zur Bewegungsachse x verläuft bzw. die Bewegungsachse x bildet. Die so gelagerte Halteeinrichtung 3 ist demnach inklusive der Getriebemittel 6 betreffend die Bewegungsachse x um die Rotationsachse r rotierbar.

Ferner weist die Messanordnung 1 eine Zuführleitung 7 für Benetzungsmittel, insbesondere Warmluft oder Wasserdampf einerseits und Kaltluft bzw. Kühlmittel andererseits auf, die ausgehend von dem gehäuseseitigen Anschluss unmittelbar in den Bereich des aufgenommenen bzw. fixierten Brillenrahmens 2.1 und dort insbesondere in den Bereich, der über den Lichtstrahl 4.1 auszuwerten ist, geführt ist. Der Brillenrahmen 2.1 oder Teile davon können auf diese Weise gekühlt werden, so dass es aufgrund der Anströmung mit Warmluft zu einer Benetzung des Brillenrahmens 2.1 mit Kondensat kommt. Überschüssiges Kondensat wird über einen Abfluss 8.1 Tellerboden 6.1 abgeführt.

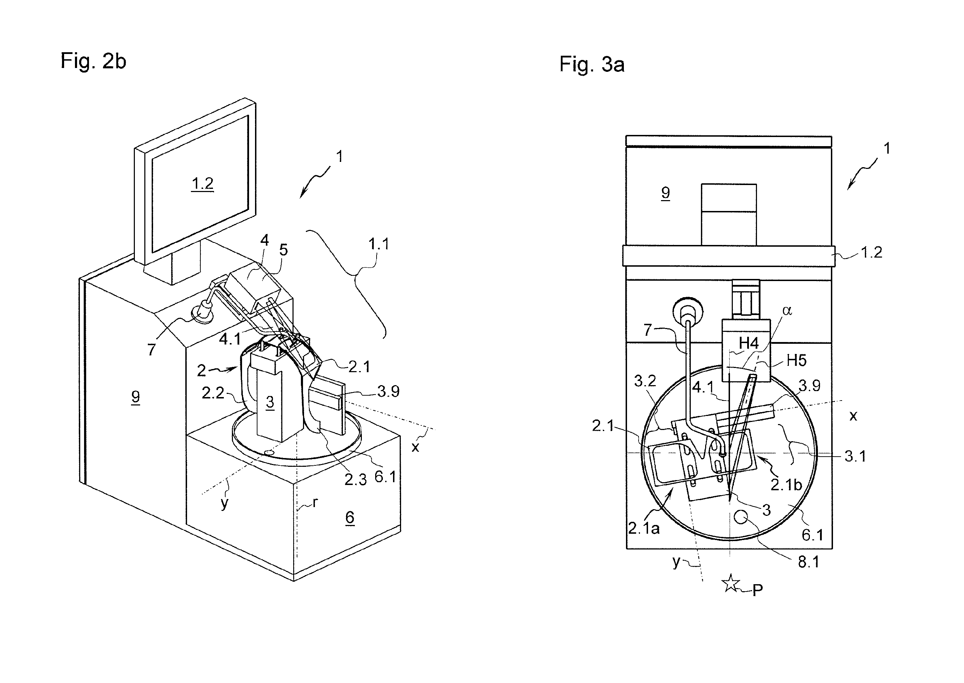

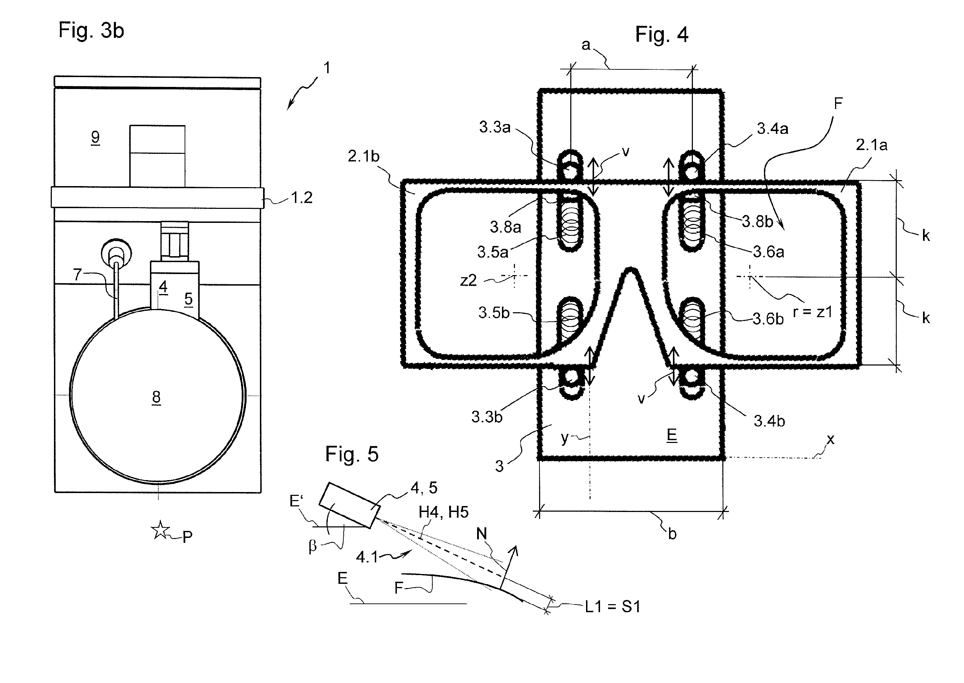

Der Brillenrahmen 2.1 weist zwei Brillengestellbügel 2.2, 2.3 auf, die sich ausgehend von der oberen Position des Brillenrahmens 2.1 auf der Halteeinrichtung 3 zur Seite bzw. nach unten hin erstrecken. Weitere Ausführungen zum Aufbau der Halteeinrichtung 3 folgen bezüglich der Figuren 3a und 4.

Während nach Ausführungsbeispiel Fig. 1 ein linker Teil 2.1a des Brillenrahmens 2.1 durch Rotation der Halteeinrichtung 3 um die Rotationsachse r vermessen wird, befindet sich gemäß Ausführungsbeispiel Fig. 2a die Halteeinrichtung 3 in ihrer gemäß Darstellung linken Position in Richtung der Bewegungsachse x, so dass die Auswertung eines rechten Teils 2.1b des Brillenrahmens 2.1 gewährleistet ist. Für die Auswertung des jeweiligen Teils des Brillenrahmens 2.1 bzw. der jeweiligen Aussparung für das einzusetzende Brillenglas wird die Halteeinrichtung 3 um die Rotationsachse r gedreht.

Gemäß Ausführungsbeispiel Fig. 2b befindet sich die Halteeinrichtung 3 ausgehend von einer Position nach Fig. 2a um etwa 90° gegen den Uhrzeigersinn verdreht, so dass die Auswertung der seitlichen Flanke des Brillenrahmens 2.1, an den der Brillengestellbügel 2.3 anschließt, gewährleistet ist.

Ausführungsbeispiel Fig. 3a betrifft die Darstellung von oben betreffend die Situation nach Fig. 2a, also eine Vermessung einer oberen Flanke des rechten Teils 2.1b des Brillenrahmens 2.1. Der Brillenrahmen 2.1 ist auf der Halteeinrichtung 3 mittig platziert, wobei die Halteeinrichtung 3 über die Bewegungsachse x derart verfahren ist, dass eine durch den rechten Teil 2.1b des Brillenrahmens 2.1 einbeschriebene Fläche F, die der einzusetzenden Form des Brillenglases entspricht, um die Rotationsachse r rotiert, so dass eine Beleuchtung der gesamten Innenumfangsfläche bzw. Innenumfangsnut des rechten Teils 2.1b des Brillenrahmens 2.1 gewährleistet ist.

Die Lichtquelle 4 weist eine Hauptachse H4 auf, die mit einer Hauptachse H5 des Sensors 5 einen Triangulationswinkel α einschließt.

Zwecks Aufnahme der Brillengestellbügel 2.2, 2.3 ist im Bereich seitlich der Halteeinrichtung 3 ein entsprechender Freiraum 3.1, 3.2 vorgesehen. Dieser Freiraum 3.1, 3.2 wird dadurch gewährleistet, dass die Halteeinrichtung 3 mit Bezug auf die Bewegungsachse x eine begrenzte Breite b aufweist. Gemäß Detailansicht Fig. 4 wird der Brillenrahmen 2.1 durch vier Klemmelemente 3.3a bis 3.4b fixiert, wobei im Bereich des jeweiligen Klemmelements 3.3a bis 3.4b eine Auflage bzw. Auflagefläche 3.8a, 3.8b vorgesehen ist. Das jeweilige Klemmelement 3.3a bis 3.4b ist über Federelemente 3.5a bis 3.6b in eine Richtung einer Bewegungsachse y vorgespannt. Alle vier Klemmelemente 3.3a bis 3.4b befinden sich bezüglich der Bewegungsachse y im selben Abstand k zur Rotationsachse r. Die Rotationsachse r fällt im Falle der Vermessung des hier dargestellten linken Teils 2.1a des Brillenrahmens 2.1 mit einer Zentrierachse z1 der durch den linken Teil 2.1a des Brillenrahmens 2.1 einbeschriebenen Fläche F zusammen, so dass die einbeschriebene Fläche F während der Rotation der Halteeinrichtung 3 um die Rotationsachse r gleichfalls um die Zentrierachse z1 rotiert.

Die Klemmelemente 3.3a, 3.3b weisen bezüglich der Klemmelemente 3.4a, 3.4b einen Abstand a auf, der etwas größer ist als ein nicht weiter beschriebenes zentrales Nasenteil des Brillenrahmens 2.1, so dass alle vier Klemmelemente 3.3a bis 3.4b im Bereich des jeweiligen rechten bzw. linken Teils des Brillenrahmens 2.1 zur Anlage kommen. Aufgrund der äquidistanten Anordnung der jeweiligen Klemmelemente 3.3a bis 3.4b zur Rotationsachse r ist der durch die Klemmelemente 3.3a bis 3.4b fixierte Brillenrahmen 2.1 ebenfalls mit Bezug zur Bewegungsachse y zentrisch zur Rotationsachse r angeordnet. Zwecks Korrelation der Rotationsachse r mit der jeweiligen Zentrierachse z1, z2 ist nach dem äquidistanten Einspannen des Brillenrahmens 2.1 also lediglich noch eine Justierung der Halteeinrichtung 3 bezüglich der Bewegungsachse x notwendig.

Nach Ausführungsbeispiel Fig. 3b ist der Auswertebereich der Auswerteeinheit 1.1 über ein topfartiges Abschottungsmittel 8 gegenüber der Umgebung abgeschottet. Das Abschottungsmittel 8 ist vorzugsweise stationär angeordnet, so dass der Tellerboden 6.1 der Getriebemittel 6 inklusive der Halteeinrichtung 3 innerhalb des Abschottungsmittels 8 sowohl um die Rotationsachse r rotiert als auch in Richtung der Bewegungsachse x bewegt werden kann. Sowohl die Lichtquelle 4 als auch der Sensor 5 und die Zuführleitung 7 für Benetzungsmittel werden seitlich in radialer Richtung in das topfförmige Abschottungsmittel 8 eingeführt. Abschottungsmittel 8, die nur einen Teil des Brillenrahmens 2.1 abschotten sind entsprechend kleiner ausgebildet.

Der Schaltschrank 9 befindet sich mit Bezug zur Auswerteeinheit 1.1 gegenüberliegend zu einer Bedienerposition P, so dass die Maschinenbreite der beschriebenen Messanordnung 1 insgesamt optimiert ist.

Fig. 5 verdeutlicht die geometrischen Verhältnisse zwischen der Lichtquelle 4 und dem Sensor 5 einerseits sowie der durch den Brillenrahmen 2.1 einbeschriebenen Fläche F. Nach Fig. 5 emittiert die Lichtquelle 4 einen linienförmigen Lichtstrahl 4.1 in Richtung ihrer Hauptachse H4 auf einen nicht dargestellten Rand des Brillenrahmens 2.1 bzw. der hier dargestellten einbeschriebenen Fläche F desselben. Mit Bezug zu einer Flächennormalen N auf diese fiktive einbeschriebene Fläche F weisen sowohl die Lichtquelle 4 als auch der Sensor 5 einen Abstand L1 bzw. S1 auf. Mit Bezug auf eine Auflageebene E bzw. in der Regel die Horizontale sind die Lichtquelle 4 sowie der Sensor 5 in einem Winkel β von etwa 25° angestellt.

Aufgrund des vorstehend beschriebenen Abstands L1, S1 einerseits sowie des ebenfalls beschriebenen Anstellwinkels β ist es möglich, mittels des linienförmigen Lichtstrahls 4.1 die Außenkontur von einbeschriebenen Flächen F bzw. entsprechend die Innenkontur der diese Fläche einschreibenden Brillenrahmen zu erfassen, selbst wenn diese wie nach Fig. 5 dargestellt eine starke Randkrümmung oder Krümmung insgesamt aufweisen.

Die Klemmelemente 3.3a bis 3.4b sind in Richtung der Bewegungsachse y wie gemäß Verschieberichtung v dargestellt bewegbar und über die Federelemente 3.5a bis 3.6b gegen den einzuspannenden Brillenrahmen 2.1 vorspannbar. Die Vorspannmittel 3.5a bis 3.6b sind identisch ausgebildet, so dass sich für alle vier Klemmelemente 3.3a bis 3.4b eine identische Vorspannung und damit eine äquidistante Ausrichtung bezüglich der Rotationsachse r in Richtung der Bewegungsachse y ergibt.

### Bezugszeichenliste

- 1: Messanordnung
- 1.1: Auswerteeinheit
- 1.2: Monitor
- 2: Brillengestell
- 2.1: Brillenrahmen
- 2.1a: linker Teil
- 2.1b: rechter Teil
- 2.2: Brillengestellbügel
- 2.3: Brillengestellbügel
- 3: Halteeinrichtung
- 3.1: Freiraum, Aussparung, erste
- 3.2: Freiraum, Aussparung, zweite
- 3.3a: Klemmelement
- 3.3b: Klemmelement
- 3.4a: Klemmelement
- 3.4b: Klemmelement
- 3.5a: Vorspannmittel, Federelement
- 3.5b: Vorspannmittel, Federelement
- 3.6a: Vorspannmittel, Federelement
- 3.6b: Vorspannmittel, Federelement
- 3.8a: Auflage
- 3.8b: Auflage
- 3.9: Führungsschiene
- 4: Lichtquelle
- 4.1: Lichtstrahl
- 5: Sensor
- 6: Getriebemittel
- 6.1: Tellerboden
- 7: Zuführleitung für Benetzungsmittel
- 8: Abschottungsmittel
- 8.1: Auffangmittel, Abfluss
- 9: Schaltschrank

- a: Abstand
- b: Breite
- E: Auflageebene F einbeschriebene Fläche
- h: Höhe
- H4: Hauptachse Lichtquelle
- H5: Hauptachse Sensor
- k: Abstand
- L1: Abstand
- N: Flächennormale
- P: Bedienerposition
- r: Rotationsachse
- S1: Abstand
- v: Verschieberichtung
- x: Bewegungsachse
- y: Bewegungsachse
- z1: Zentrierachse
- z2: Zentrierachse
- α: Triangulationswinkel
- β: Anstellwinkel

## Patentansprüche

1. Messanordnung (1) zum optischen Vermessen einer Innenseite eines Brillenrahmens (2.1) eines Brillengestells (2), der eine einer Brillenglasform entsprechende einbeschriebene Fläche F zumindest teilweise begrenzt, mit einer Halteeinrichtung (3) zum Lagern des Brillengestells (2), mit mindestens einer Lichtquelle (4) zum Erzeugen eines auf einen auszuwertenden Bereich des Brillenrahmens (2.1) zu projizierenden Lichtstrahls (4.1), mit mindestens einem mit einer Auswerteeinheit (1.1) koppelbaren Sensor (5) zur Erfassung des reflektierten Lichtstrahls (4.1), wobei die Halteeinrichtung (3) und die Lichtquelle (4) relativ zueinander um eine Rotationsachse r drehbar und in Richtung einer Bewegungsachse x verfahrbar sind und die Bewegungsachse x zumindest eine Bewegungskomponente in eine Richtung rechtwinklig zur Rotationsachse r aufweist, wobei der auswertbare Bereich des Brillenrahmens (2.1) mit Bezug zur Rotationsachse r einen Umfang von bis zu 360° aufweist, wobei die Halteeinrichtung (3) zur Fixierung des Brillengestells (2) mit Brillengestellbügeln (2.2, 2.3) dient, wobei im Bereich der Halteeinrichtung (3) mindestens ein Freiraum (3.1, 3.2) vorgesehen ist, der zur Aufnahme der Brillengestellbügel (2.2, 2.3) eines zu haltenden Brillengestells (2) dient, die nicht eingeklappt oder nicht einklappbar sind, wobei der Freiraum (3.1, 3.2) auf der der Lichtquelle (4) und/oder dem Sensor (5) abgewandten Seite des Brillenrahmens (2.1) vorgesehen ist,
**dadurch gekennzeichnet,**
**dass** die Halteeinrichtung (3) in Richtung der ersten Bewegungsachse x sowohl in eine erste Auswerteposition bezüglich einer Zentrierachse z1 einer einbeschriebenen Fläche F eines linken Teils (2.1a) eines aufzunehmenden Brillenrahmens (2.1) als auch in eine zweite Auswerteposition bezüglich einer Zentrierachse z2 einer einbeschriebenen Fläche F eines rechten Teils (2.1b) eines aufzunehmenden Brillenrahmens (2.1) bringbar ist, wobei in der jeweiligen Auswerteposition die Zentrierachse z1, z2 koaxial zur Rotationsachse r ausgerichtet ist und die Zentrierung in der zweiten Bewegungsachse y durch Klemmelemente (3.3a, 3.3b, 3.4a, 3.4b) zum Fixieren des Brillenrahmens, die die Halteeinrichtung aufweist, gegeben ist, wobei die Halteeinrichtung (3) um die Rotationsachse r rotierbar ist, und dass die Bewegungsachse x der Rotationsachse r überlagert ist, so dass Getriebemittel (6) der Bewegungsachse x um die Rotationsachse r rotierbar sind.

2. Messanordnung (1) **nach Anspruch 1,**
**dadurch gekennzeichnet,**
**dass** die Halteeinrichtung (3) mindestens zwei Klemmelemente (3.3a, 3.3b, 3.4a, 3.4b) zum Fixieren des Brillenrahmens (2.1) aufweist, die in eine Richtung einer Bewegungsachse y mit einer Bewegungskomponente rechtwinklig zur Bewegungsachse x und mit einer Bewegungskomponente rechtwinklig zur Rotationsachse r bewegbar und gegen den Brillenrahmen (2.1) vorspannbar sind.

3. Messanordnung nach Anspruch 2,
**dadurch gekennzeichnet,**
**dass** die Klemmelemente (3.3a, 3.3b, 3.4a, 3.4b) Getriebe- und/oder Vorspannmittel (3.5a, 3.6a) aufweisen, wobei das jeweilige Klemmelement (3.3a,3.4a) mit Bezug zur Richtung der Bewegungsachse y bei fixiertem Brillenrahmen (2.1) die gleiche Vorspannung und/oder den gleichen Abstand k in Richtung der Bewegungsachse y aufweist.

4. Messanordnung nach einem der Ansprüche 2 **bis 3,**
**dadurch gekennzeichnet,**
**dass** die Klemmelemente (3.3a, 3.3b, 3.4a, 3.4b) mit Bezug zur Bewegungsachse x einen Abstand a aufweisen, der einen Wert zwischen 1 cm und 10 cm oder zwischen 2,5 cm und 6,5 cm oder 4,5 cm nicht überschreitet.

5. Messanordnung nach einem der vorhergehenden Ansprüche,
**dadurch gekennzeichnet,**
**dass** Abschottungsmittel (8) vorgesehen sind, mittels derer der zu benetzende Teil des Brillenrahmens (2.1) gegenüber der Messanordnung (1) abschottbar ist.

6. Messanordnung nach einem der vorhergehenden Ansprüche,
**dadurch gekennzeichnet,**
**dass** Auffangmittel (8.1) für Flüssigkeiten vorgesehen sind, über die anfallendes Kondensat aus dem Bereich der Halteeinrichtung (3) abgeführt und/oder gespeichert werden kann.

7. Messanordnung nach einem der vorhergehenden Ansprüche,
**dadurch gekennzeichnet,**
**dass** der Brillenrahmen (2.1) über die Lichtquelle (4) direkt mit dem Lichtstrahl (4.1) beleuchtbar ist, wobei die Lichtquelle (4) mit Bezug zur Richtung einer Flächennormalen N der einbeschriebenen Fläche F mit einem Abstand L1 zur einbeschriebenen Fläche F positionierbar ist, und dass der Sensor (5) mit dem vom Brillenrahmen (2.1) reflektierten Licht unmittelbar beaufschlagbar ist, wobei der Sensor (5) mit Bezug zur Richtung der Flächennormalen N mit einem Abstand S1 zur Fläche F angeordnet ist.

8. Messanordnung nach **einem der vorhergehenden Ansprüche,**
**dadurch gekennzeichnet,**
**dass** die Lichtquelle (4) und der Sensor (5) bezüglich einer jeweiligen optischen Hauptachse H4, H5 einen Triangulationswinkel α einschließen, wobei eine durch den Triangulationswinkel α aufgespannte Ebene E definiert ist, und die Ebene E gegenüber der Rotationsachse r (Vertikalen) und gegenüber der Bewegungsachse x (Horizontalen) in einem Winkel ß angestellt ist.

9. Messanordnung nach einem der vorhergehenden Ansprüche,
**dadurch gekennzeichnet,**
**dass** ein Schaltschrank (9) vorgesehen ist, der mit Bezug zur Halteeinrichtung (3) gegenüberliegend zu einer Bedienerposition P angeordnet ist.

10. Verfahren zum berührungslosen Vermessen eines Brillenrahmens (2.1), bei dem der Brillenrahmen (2.1) zwecks umlaufender Vermessung eines linken Teils (2.1a) und eines rechten Teil (2.1b) des Brillenrahmen (2.1) jeweils koaxial zu einer Zentrierachse z1, z2 einer durch den jeweiligen Teil (2.1a, 2.1b) des Brillenrahmens (2.1) einbeschriebenen Fläche F um eine Rotationsachse r rotiert wird, wobei
a) der Brillenrahmen (2.1) sowohl in Richtung einer Bewegungsachse y als in Richtung einer Bewegungsachse x, rechtwinklig zur Bewegungsachse y mittig zur Rotationsachse r positioniert und fixiert wird, **wobei die Zentrierung in der Bewegungsachse y durch Klemmelemente (3.3a, 3.3b, 3.4a, 3.4b) einer Halteeinrichtung (3) erfolgt;**
**dadurch gekennzeichnet, dass**
b) **die Halteeinrichtung (3) mit dem** Brillenrahmen (2.1) zwecks Ausrichtung der Rotationsachse r
- mit einer Zentrierachse z1 einer durch den linken Teil (2.1a) des Brillenrahmen (2.1) einbeschriebenen Fläche F **oder**
- **mit einer Zentrierachse z2 einer durch den rechten Teil (2.1b) des Brillenrahmens (2.1) einbeschriebenen Fläche F** nur in eine einzige Richtung einer Bewegungsachse x, rechtwinklig zur Bewegungsachse y, verfahren wird.

11. Verfahren nach Anspruch **10,**
**dadurch gekennzeichnet, dass ab Beginn der Messung die Rotation um die Rotationsachse r ruckfrei und/oder mit gleichförmiger Beschleunigung und/oder mit konstanter Rotationsgeschwindigkeit erfolgt**.

## Claims

1. Set-up of measuring instruments (1) for the optical measuring of an inner surface of a spectacle frame (2.1) of a spectacle rim (2), said spectacle frame (2.1) at least partially delimiting an inscribed area F that corresponds to a spectacle lens shape, with a holding device (3) for supporting the spectacle rim (2), with at least one light source (4) for generating a light beam (4.1) to be projected onto a region of the spectacle frame (2.1), which region is to be analyzed, with at least one sensor (5) for detecting the reflected light beam (4.1), which sensor (5) can be coupled to an analyzing unit (1.1), wherein the holding device (3) and the light source (4) can be rotated with respect to each other about an axis of rotation r and can be moved in the direction of an axis of movement x and the axis of movement x has at least one component of movement in a direction that is orthogonal to the axis of rotation r, wherein the analyzable region of the spectacle frame (2.1) has a circumference of up to 360° with respect to the axis of rotation r, wherein the holding device (3) serves to fix the spectacle rim (2) with spectacle rim bows (2.2, 2.3), wherein at least one free space (3.1, 3.2) is provided in the region of the holding device (3), which free space (3.1, 3.2) serves to accommodate the spectacle rim bows (2.2, 2.3) of a spectacle rim (2) that is to be held, which spectacle rim bows (2.2, 2.3) are not swung in or cannot be swung in, wherein the free space (3.1, 3.2) is provided on that side of the spectacle frame (2.1) which faces away from the light source (4) and/or from the sensor (5),
**characterized in that** the holding device (3) can be moved, in the direction of the first axis of movement x, to a first analyzing position with respect to a centering axis z1 of an inscribed area F of a left part (2.1 a) of a spectacle frame (2.1), which spectacle frame (2.1) is to be accommodated, as well as to a second analyzing position with respect to a centering axis z2 of an inscribed area F of a right part (2.1 b) of a spectacle frame (2.1), which spectacle frame (2.1) is to be accommodated, wherein in the respective analyzing position, the centering axis z1, z2 is coaxial with the axis of rotation r and the centering in the second axis of movement y is ensured by clamping elements (3.3a, 3.3b, 3.4a, 3.4b) for fixing the spectacle frame, wherein the holding device has said clamping elements (3.3a, 3.3b, 3.4a, 3.4b), wherein the holding device (3) can be rotated about the axis of rotation r, and **in that** the axis of movement x is superimposed on the axis of rotation r so that gear means (6) of the axis of movement x can be rotated about the axis of rotation r.

2. Set-up of measuring instruments (1) according to Claim 1,
**characterized in**
**that** the holding device (3) has at least two clamping elements (3.3a, 3.3b, 3.4a, 3.4b) for fixing the spectacle frame (2.1), which clamping elements (3.3a, 3.3b, 3.4a, 3.4b) can be moved in a direction of an axis of movement y with a component of movement that is orthogonal to the axis of movement x and with a component of movement that is orthogonal to the axis of rotation r and which clamping elements (3.3a, 3.3b, 3.4a, 3.4b) can be prestressed against the spectacle frame (2.1).

3. Set-up of measuring instruments according to Claim 2,
**characterized in**
**that** the clamping elements (3.3a, 3.3b, 3.4a, 3.4b) have gear and/or prestressing means (3.5a, 3.6a), wherein the respective clamping element (3.3a, 3.4a) has, with respect to the direction of the axis of movement y and when the spectacle frame (2.1) is fixed, the same prestress and/or the same distance k in the direction of the axis of movement y.

4. Set-up of measuring instruments according to any one of Claims 2 to 3,
**characterized in that** the clamping elements (3.3a, 3.3b, 3.4a, 3.4b) have a distance a with respect to the axis of movement x that does not exceed a value of between 1 cm and 10 cm or between 2.5 cm and 6.5 cm or 4.5 cm.

5. Set-up of measuring instruments according to any one of the preceding claims,
**characterized in that** sealing means (8) are provided, by means of which that part of the spectacle frame (2.1) which is to be wetted can be sealed off from the set-up of measuring instruments (1).

6. Set-up of measuring instruments according to any one of the preceding claims,
**characterized in that** collecting means (8.1) for liquids are provided, by means of which accumulating condensate can be removed from the region of the holding device (3) and/or can be stored.

7. Set-up of measuring instruments according to any one of the preceding claims, **characterized in that** the spectacle frame (2.1) can be directly illuminated with the light beam (4.1) by means of the light source (4), wherein the light source (4) can be positioned, with respect to the direction of a surface normal N of the inscribed area F, at a distance L1 to the inscribed area F, and that the sensor (5) can be directly supplied with the light reflected from the spectacle frame (2.1), wherein the sensor (5) is arranged, with respect to the direction of the surface normal N, at a distance S1 to the area F.

8. Set-up of measuring instruments according to any one of the preceding claims, **characterized in that** the light source (4) and the sensor (5) enclose a triangulation angle α with respect to a respective principal optical axis H4, H5, wherein a plane E generated by the triangulation angle α is defined, and the plane E is arranged at an angle ß with respect to the axis of rotation r (vertical) and with respect to the axis of movement x (horizontal).

9. Set-up of measuring instruments according to any one of the preceding claims, **characterized in that** a switch cabinet (9) is provided, which switch cabinet (9) is arranged, with respect to the holding device (3), opposite an operator's position P.

10. Method for the contactless measuring of a spectacle frame (2.1), in which the spectacle frame (2.1) is rotated, for the purpose of the circumferential measuring of a left part (2.1 a) and of a right part (2.1 b) of the spectacle frame (2.1), about an axis of rotation r and coaxially with a centering axis z1 and z2, respectively, of an area F inscribed in the respective part (2.1a, 2.1 b) of the spectacle frame (2.1), wherein
a) the spectacle frame (2.1) is positioned and fixed, in the direction of an axis of movement y as well as in the direction of an axis of movement x, such that it is orthogonal to the axis of movement y and centrical with respect to the axis of rotation r, wherein the centering in the axis of movement y is performed by clamping elements (3.3a, 3.3b, 3.4a, 3.4b) of a holding device (3),
**characterized in that**
b) the holding device (3) with the spectacle frame (2.1) is moved only in a single direction of an axis of movement x orthogonally to the axis of movement y for the purpose of aligning the axis of rotation r
- with a centering axis z1 of an area F inscribed in the left part (2.1 a) of the spectacle frame (2.1) or
- with a centering axis z2 of an area F inscribed in the right part (2.1 b) of the spectacle frame (2.1).

11. Method according to Claim 10,
**characterized in that** from the beginning of measurement, rotation about the axis of rotation r is performed without jerk and/or with uniform acceleration and/or with constant rotational speed.

## Revendications

1. Dispositif de mesure (1) pour la mesure optique d'un côté intérieur d'un cadre de lunettes (2.1) d'une monture de lunettes (2) qui limite au moins partiellement une surface F inscrite correspondant à une forme de verres de lunettes, avec un dispositif de retenue (3) destiné à supporter la monture de lunettes (2), avec au moins une source de lumière (4) pour la production d'un rayon lumineux (4.1) à projeter sur une zone à analyser du cadre de lunettes (2.1), avec au moins un capteur (5), pouvant être couplé à une unité d'analyse (1.1) pour la détection du rayon lumineux (4.1) réfléchi, le dispositif de retenue (3) et la source de lumière (4) pouvant tourner relativement l'un par rapport à l'autre autour d'un axe de rotation r et pouvant être déplacés en direction d'un axe de mouvement x, et l'axe de mouvement x présentant au moins une composante de mouvement dans une direction à angle droit par rapport à l'axe de rotation r, la zone analysable du cadre de lunettes (2.1) présentant par rapport à l'axe de rotation r une étendue pouvant aller jusqu'à 360°, le dispositif de retenue (3) servant à la fixation de la monture de lunettes (2) avec des branches de monture de lunettes (2.2, 2.3), au moins un espace libre (3.1, 3.2) étant prévu dans la zone du dispositif de retenue (3) et servant à recevoir les branches de monture de lunettes (2.2, 2.3) d'une monture de lunettes (2) à retenir qui ne sont pas repliées ou pas repliables, l'espace libre (3.1, 3.2) étant prévu sur le côté du cadre de lunettes (2.1) qui est éloigné de la source de lumière (4) et/ou du capteur (5),
**caractérisé en ce que**
le dispositif de retenue (3) peut être amené en direction du premier axe de mouvement x aussi bien dans une première position d'analyse par rapport à un axe de centrage z1 d'une surface F inscrite d'une partie gauche (2.1 a) d'un cadre de lunettes (2.1) à recevoir que dans une deuxième position d'analyse par rapport à un axe de centrage z2 d'une surface F inscrite d'une partie droite (2.1 b) d'un cadre de lunettes (2.1) à recevoir, les axes de centrage z1, z2 étant, dans la position d'analyse respective, orientés de façon coaxiale à l'axe de rotation r, et le centrage étant, dans le deuxième axe de mouvement y, donné par des éléments de serrage (3.3a, 3.3b, 3.4a, 3.4b) que présente le dispositif de retenue pour la fixation du cadre de lunettes, le dispositif de retenue (3) pouvant tourner autour de l'axe de rotation r, et **en ce que** l'axe de mouvement x est superposé à l'axe de rotation r de telle sorte que des moyens d'engrenage (6) de l'axe de mouvement x peuvent tourner autour de l'axe de rotation r.

2. Dispositif de mesure (1) selon la revendication 1,
**caractérisé en ce que**
le dispositif de retenue (3) présente au moins deux éléments de serrage (3.3a, 3.3b, 3.4a, 3.4b) pour la fixation du cadre de lunettes (2.1) qui peuvent être déplacés dans une direction d'un axe de mouvement y avec une composante de mouvement à angle droit par rapport à l'axe de mouvement x et avec une composante de mouvement à angle droit par rapport à l'axe de rotation r, et qui peuvent être prétendus contre le cadre de lunettes (2.1).

3. Dispositif de mesure (1) selon la revendication 2,
**caractérisé en ce que**
les éléments de serrage (3.3a, 3.3b, 3.4a, 3.4b) présentent des moyens d'engrenage et/ou de pré-tension (3.5a, 3.6a), l'élément de serrage (3.3a, 3.4a) respectif présentant, par rapport à la direction de l'axe de mouvement y, quand le cadre de lunettes (2.1) est fixé, la même pré-tension et/ou la même distance k en direction de l'axe de mouvement y.

4. Dispositif de mesure (1) selon une des revendications 2 à 3,
**caractérisé en ce que**
les éléments de serrage (3.3a, 3.3b, 3.4a, 3.4b) présentent, par rapport à l'axe de mouvement x, une distance a qui ne dépasse pas une valeur entre 1 cm et 10 cm ou entre 2,5 cm et 6,5 cm ou 4,5 cm.

5. Dispositif de mesure (1) selon une des revendications précédentes,
**caractérisé en ce que**
des moyens de cloisonnement (8) sont prévus, au moyen desquels la partie du cadre de lunettes (2.1) à mouiller peut être cloisonnée par rapport au dispositif de mesure (1).

6. Dispositif de mesure (1) selon une des revendications précédentes,
**caractérisé en ce que**
des moyens de collecte (8.1) sont prévus pour des liquides, par le biais desquels le condensat présent peut être évacué de la zone du dispositif de retenue (3) et/ou stocké.

7. Dispositif de mesure (1) selon une des revendications précédentes,
**caractérisé en ce que**
le cadre de lunettes (2.1) peut être éclairé directement avec le rayon lumineux (4.1) par le biais de la source de lumière (4), la source de lumière (4) pouvant, par rapport à la direction d'une normale N à la surface de la surface F inscrite, être positionnée avec une distance L1 à la surface F inscrite, et **en ce que** le capteur (5) peut être exposé directement à la lumière réfléchie par le cadre de lunettes (2.1), le capteur (5) étant, par rapport à la direction de la normale N à la surface, disposé avec une distance S1 à la surface F.

8. Dispositif de mesure (1) selon une des revendications précédentes,
**caractérisé en ce que**
la source de lumière (4) et le capteur (5), forment, par rapport à un axe principal optique H4, H5 respectif, un angle de triangulation α, un plan E engendré par l'angle de triangulation α étant défini, et le plan E étant placé en formant un angle β par rapport à l'axe de rotation r (la verticale) et par rapport à l'axe de mouvement x (l'horizontale).

9. Dispositif de mesure (1) selon une des revendications précédentes,
**caractérisé en ce**
**qu'**il est prévu une armoire de commande (9) qui est disposée en face d'une position d'opérateur P par rapport au dispositif de retenue (3).

10. Procédé de mesure sans contact d'un cadre de lunettes (2.1), dans lequel le cadre de lunettes (2.1) est mis en rotation autour d'un axe de rotation r, en vue d'une mesure périphérique d'une partie gauche (2.1 a) et d'une partie droite (2.1 b) du cadre de lunettes (2.1), respectivement de façon coaxiale à un axe de centrage z1, z2 d'une surface F inscrite par la partie respective (2.1 a, 2.1 b) du cadre de lunettes (2.1),
a) le cadre de lunettes (2.1) étant positionné et fixé, aussi bien dans la direction d'un axe de mouvement y que dans la direction d'un axe de mouvement x, à angle droit par rapport à l'axe de mouvement y, de façon centrée par rapport l'axe de rotation r, le centrage dans l'axe de mouvement y étant effectué par des éléments de serrage (3.3a, 3.3b, 3.4a, 3.4b) d'un dispositif de retenue (3) ;
**caractérisé en ce que**
b) le dispositif de retenue (3) avec le cadre de lunettes (2.1), en vue de l'alignement de l'axe de rotation r,
- est déplacé avec un axe de centrage z1 d'une surface F inscrite par la partie gauche (2.1 a) du cadre de lunettes (2.1) ou
- avec un axe de centrage z2 d'une surface F inscrite par la partie droite (2.1 b) du cadre de lunettes (2.1) uniquement dans une direction unique d'un axe de mouvement x, à angle droit par rapport à l'axe de mouvement y.

11. Procédé selon la revendication 10,
**caractérisé en ce que**,
à partir du début de la mesure, la rotation s'effectue autour de l'axe de rotation r sans à-coups et/ou avec une accélération uniforme et/ou avec une vitesse de rotation constante.
